# EUROPÄISCHE PATENTSCHRIFT

(11) **EP 3 888 229 B1**
(45) Veröffentlichungstag und Bekanntmachung des Hinweises auf die Patenterteilung: **21.10.2026**
(21) Anmeldenummer: 19806012.1
(22) Anmeldetag: 26.11.2019
(51) Int. Cl.: H02K 1/24, H02K 16/04

(54) **ELEKTRISCHE RINGMASCHINE UND VERFAHREN ZUR HERSTELLUNG EINES ROTORS FÜR EINE ELEKTRISCHE RINGMASCHINE**
ELECTRIC RING MACHINE AND METHOD FOR PRODUCING A ROTOR FOR AN ELECTRIC RING MACHINE
MACHINE ÉLECTRIQUE À JOINT TORIQUE ET PROCÉDÉ DE FABRICATION D'UN ROTOR POUR UNE MACHINE ÉLECTRIQUE À JOINT TORIQUE

(30) Priorität: 26.11.2018 EP 18020618
(43) Veröffentlichungstag der Anmeldung: 06.10.2021
(73) Patentinhaber: Rheinisch-Westfälische Technische Hochschule (RWTH) Aachen, 52056 Aachen (DE)
(72) Erfinder: REIMERS, Jan-Dirk, 52074 Aachen (DE); DE DONCKER, Rik, 52074 Aachen (DE); BERTHOLD, Tobias, 52335 Düren (DE); LANGE, Tobias, 52064 Aachen (DE); WEISS, Claude Pascal, 52064 Aachen (DE)
(74) Vertreter: Michalski Hüttermann & Partner mbB
(86) Internationale Anmeldenummer: PCT/EP2019/082628
(87) Internationale Veröffentlichungsnummer: WO 2020/109329

(56) Entgegenhaltungen:
- EP-A1- 3 261 237
- US-A1- 2012 074 801
- "2 Rotor Design", 31 January 2014, CRC PRESS, Boca Raton, London, New York, ISBN: 978-1-4200-9143-4, article TONG WEI: "2 Rotor Design", pages: 83 - 153, XP055417586, DOI: 10.1201/b16863-3

## Beschreibung

Die vorliegende Erfindung betrifft eine Anordnung eines Rotors für eine elektrische Arbeitsmaschine, die als segmentierte Ringmaschine ausgeführt und für den 4-Quadrantenbetrieb mit einem Umrichter vorgesehen ist.

Die Erfindung betrifft neben dem Rotor auch eine entsprechende elektrische Ringmaschine und ein Verfahren zur Herstellung eines derartigen Rotors.

Der Rotor weist mehrere elektrisch voneinander isolierte Einzelbleche auf, die zu einem Blechpaket gestapelt werden. Ein Rotor für einen Reluktanzmotor ist aus der US 5,818,140 A bekannt. Der darin beschriebene Rotor hat ein Blechpaket aus geschichteten Rotorblechen, die Aussparungen, z.B. Ausstanzungen oder Ausschnitte, aufweisen, die Barrieren genannt werden. Dieser Rotor ist allgemein auch als Vagati-Rotor bezeichnet. Durch die Barrieren ergeben sich zumeist geschwungene, streifenförmige Blechabschnitte, die als Flussleitabschnitte dienen. Dadurch wird der magnetischen Fluss in der für die Bereitstellung der Reluktanz des Rotors nötigen Weise geführt. Die Reaktanz des Blechpakets ist in Richtung der q-Achse, d. h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, also die d-Achsen.

Die Aussparungen zum Bilden der Flusssperren führen zum einen zu einer Schwächung der mechanischen Stabilität des Blechpakets, zum anderen führen aber die absichtlich dünnen Stege dennoch zu einem ungewollten Streufluss. Dieser vermindert die Drehmomentbildung. Daher ist sowohl die Dicke, wie auch die Konstanz der Dicke der Stege ein Maß für die Performance des Rotors.

Die grundsätzlich streifenförmigen Flussleitabschnitte führen jedoch zu einer berechenbaren und grundsätzlich hohen Drehmomentausbeute. Die Fertigungstoleranzen wirken nun insbesondere auf die Geometriemaße die ebenso durch ein kleines Maß geprägt werden, die Stegdicke ist ein solches Maß. Die Stegdicke kann und sollte in der Größenordnung der Elektroblechdicke liegen, welche sich zwischen 0,8 und 0,2 mm befindet.

Die Stege können also zwischen 0,2 und auch 1,2 mm liegen.

Alleine die Rundheitsmaße eines 1,2 m im Durchmesser bemaßten Rotors kann in Segmentbauweise einen guten Bruchteil dessen aufweisen. Die Stegdicke an den Barrierenenden wird bei Ausführung nach dem Stand der Technik durch diese Fertigungs- und Bautoleranzen additiv überlagert. Selbst wenn der montierte Rotor mit Aufmaß paketiert wird und folgend auf sein Endmaß abgearbeitet wird, so addieren sich Exzentrizitäten umlaufend auf die Stegdickenverteilung. Grundsätzlich dickere Stegbreiten lassen den prozentualen und umlaufenden Dickenfehler oder gar ein Zerstören der Stege beim Abarbeiten weniger wahrscheinlich und geringer werden, vermindern aber das mögliche Drehmoment und erzeugen einen umlaufenden Drehmoment- und Flussfehler.

Die EP 3 261 237 A1 zeigt einen Rotor für eine elektrische Ringmaschine in Ausführung einer Reluktanzmaschine, die als Synchronreluktanzmaschine betrieben wird, mit Barrieren aufweisenden Rotorblechen.

Die US 2021/074801 A1 zeigt einen Rotor mit Barrieren aufweisenden Rotorblechen, wobei Ausnehmungen an der Außenseite der Rotorbleche in radialer Erstreckung gegenüber den inneren Barrieren ausgeführt sind, wobei die Ausnehmungen jeweils einen Barrierensteg entstehen lassen.

Der Erfindung liegt die Aufgabe zugrunde, einen Reluktanzrotor der eingangs bezeichneten Art sowie ein Verfahren zur Herstellung eines derartigen Rotors anzugeben, bei denen der Rotor sowohl ein hohes Drehmoment als auch eine vereinfachte Fertigung ermöglicht, so dass er insbesondere als kostengünstiger industrieller Großantrieb geeignet ist.

Die Aufgabe wird durch die Gegenstände der unabhängigen Patentansprüche gelöst. Vorteilhafte Weiterbildungen der Erfindung ergeben sind durch die Merkmale der Unteransprüche. Der erfindungsgemäße Rotor ist auch hier als Reluktanzrotor nach dem Prinzip von Vagati ausgebildet, das heißt er weist Rotorblechschichten aus einem ferromagnetischen Material auf, wobei jede Rotorblechschicht aus einem oder mehreren Rotorblechen gebildet ist und zumindest eine durch eine Aussparung in der Rotorblechschicht gebildete Flusssperre bzw. Barriere aufweist.

Das vorliegende Beispiel weist drei Barrieren auf, die Ausführungen treffen aber auch auf Rotorblechschichten mit mehreren Flusssperren zu.

Die Anwendungsanforderungen an die Barrieren und Stege treffen im Rahmen der konstruktiven Gestaltung auf die Notwendigkeit der Fertigungsfähigkeit, der geeigneten Fertigungsfolge bei einer Modulbauweise oder aber auf konstruktive Plattformkonzepte, die die wirtschaftliche und damit industrielle Herstellung von Antriebskomponenten durch Komponentenhersteller erst ermöglicht. In diesem Anforderungsfeld bestehen nach wie vor Probleme innerhalb des technologischen Kompromisses der konstruktiven und fertigungstechnisch optimierten Bauausführung.

Das Problem der eingangs beschriebenen Elektromaschinen und auch der Ausführung der Fertigung nach Stand der Technik betrifft die umlaufende Stegdicke der Barrieren nach Montage und auch nach abarbeiten des Fertigungsaufmaßes der Rotorbleche bei größeren Luftspaltabmessungen.

Das Problem innerhalb der Umsetzbarkeit von größeren Durchmessern steht und fällt mit der Möglichkeit den Läufer trotz Montage- und Fertigungstoleranzen umlaufend gleichmäßig mit Barrieren zu gestalten und die Luftspaltkonstanz zu wahren, insbesondere bei einem im Vergleich zum üblichen Maß vergrößerten Luftspaltdurchmesser, wie er bei Ausführungen als Scheibenmaschine mit hohem Moment vorliegen würde.

Diese technischen Probleme werden in keiner vorliegenden Anmeldung gelöst. Eine Umsetzung ist nicht bekannt.

Es besteht für die Anordnung die Aufgabe einen Bauausführung vorzuschlagen, die es ermöglicht die Barrierenstruktur, wie er erfindungsgemäß ausgeführt, gleichmäßig herzustellen und vereinfacht zu fertigen und wird im Folgenden näher vorgestellt.

Zur Lösung dieser Aufgabe schafft die vorliegende Erfindung eine elektrische Ringmaschine in Ausführung einer Reluktanzmaschine, die als Synchronreluktanzmaschine betrieben wird, mit einem Stator und einem Rotor, wobei die elektrische Ringmaschine als Innenläufer ausgeführt ist, wobei der Rotor zur Flussführung Barrieren aufweisende Rotorbleche umfasst, wobei die Rotorbleche als Ringschnitte oder segmentierte Rotorbleche ausgeführt sind und der Rotor aus entsprechenden Ringschnitten oder Segmenten zusammengesetzt ist, wobei Ausnehmungen an der Außenseite der Rotorbleche in radialer Erstreckung gegenüber den inneren Barrieren ausgeführt sind. Diese führen zu Stegen die beidseitig definiert gefertigt werden und trotz weiterer Fertigungsschritte wie z.B. abarbeiten eines Aufmaßes zum endgültigen Luftspaltdurchmesser nicht weiter bearbeite werden müssen.

Erfindungsgemäß ist vorgesehen, dass die Ausnehmungen jeweils einen Steg definierter Stegdicke entstehen lassen, dessen Stegdicke es ermöglicht, dass der Barrierensteg im Betrieb der Reluktanzmaschine über den Umfang verteilt gleichmäßig in Sättigung geht, wobei der Rotor ein auf sein Endmaß abgearbeitetes Aufmaß aufweist, bei dem sich die Wirkung des Abarbeitens auf eine äußere Dicke der Barrierenerstreckung an der Außenseite des Rotors abseits der Bereiche der Barrierenstege beschränkt.

Mit anderen Worten ist es durch die Ausnehmungen, die sich soweit nach Innen erstrecken, dass sie die Barrierenstege definierter Stegdicke (mit)bilden, nun möglich, den Rotor nach dem Zusammenbau durch Abarbeiten (z.B. spanabhebendes Abarbeiten wie Abdrehen) auf sein umfängliches Endmaß zu bringen, ohne dass die Stege mitbearbeitet werden und sich dabei die Stegdicke ändert. Die Ausnehmungen verlegen die Stege also radial nach Innen und koppeln so die Barrierenstege und deren Stegdicke von einer Nachbearbeitung an der Außenseite des Rotors ab.

Die Erfindung betrifft ferner ein Verfahren zur Herstellung eines Rotors für eine elektrische Ringmaschine gemäß dem unabhängigen Anspruch 5.

Diese und weitere Merkmale und Vorteile der vorliegenden Erfindung werden anhand der nachfolgenden Beschreibung verschiedener erfindungsgemäßer Anordnungen unter Bezugnahme auf die beiliegende Zeichnung deutlich. Darin ist:
Figur 1 eine schematische Darstellung der Ausführung eines Läuferbleches mit Flussbarrieren nach dem Stand der Technik mit Aufmaß und ohne äußere Ausnehmungen für die Barrierenstege.
Figur 2 eine schematische Darstellung einer Ausführung eines Läuferbleches mit Flussbarrieren nach dem erfindungsgemäßen Vorgehen mit oder ohne Aufmaß und insbesondere mit äußeren Ausnehmungen für die Barrierenstege.
Figur 3 eine schematische Darstellung der äußeren Ausnehmungen für die Barrierenstege in größerer Darstellung

Im Folgenden meint die Verwendung des Begriffes E-Maschine oder Antrieb sowohl eine motorisch, wie auch generatorisch arbeitende Elektromaschine. Der Begriff Läufer bzw. Rotor 10 meint den drehenden Teil der Elektromaschine, der im drehmomentbildenden Teil aus Elektroblech bzw. aus Ringschnitten oder Segmenten bestehen kann.

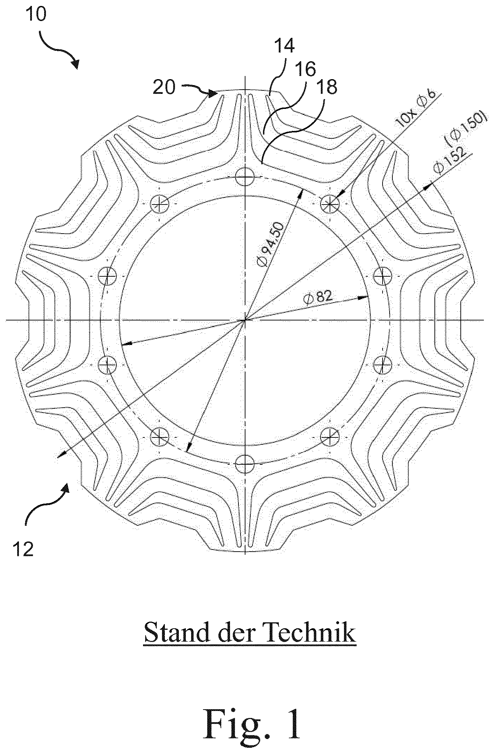

Figur 1 zeigt die heute übliche Ausführung eines Rotor- bzw. auch Läuferschnittes eines Rotors 10 bzw. Rotorblechs 12 für eine Synchronreluktanzmaschine nach Stand der Technik. Je nach Bauausführung kann der Rotorschnitt ein Aufmaß zum Luftspaltdurchmesser aufweisen, oder aber direkt das Maß des Luftspaltdurchmessers aufweisen. Die Toleranzketten der Baugruppen, die sich anhand der fertigungstechnischen Ausgestaltung ergeben bzw. erzielen lassen geben hier unter Umständen ein Aufmaß vor, das später nach der Montage zum gewünschten Luftspaltdurchmesser abgearbeitet werden sollte. Das Rotorblech 12 weist Barrieren 14, 16, 18 mit Stegen, also Barrierenstege 20, auf.

Sämtliche Fertigungs- und Montagetoleranzen müssen im Aufmaß berücksichtigt sein, so dass später der Luftspaltdurchmesser erzielt werden kann, ohne nicht gewünschtes Material zu entfernen, oder gegenüberliegend zur Exzentrizität der Maximaltoleranzlage ins Freie zu schneiden.

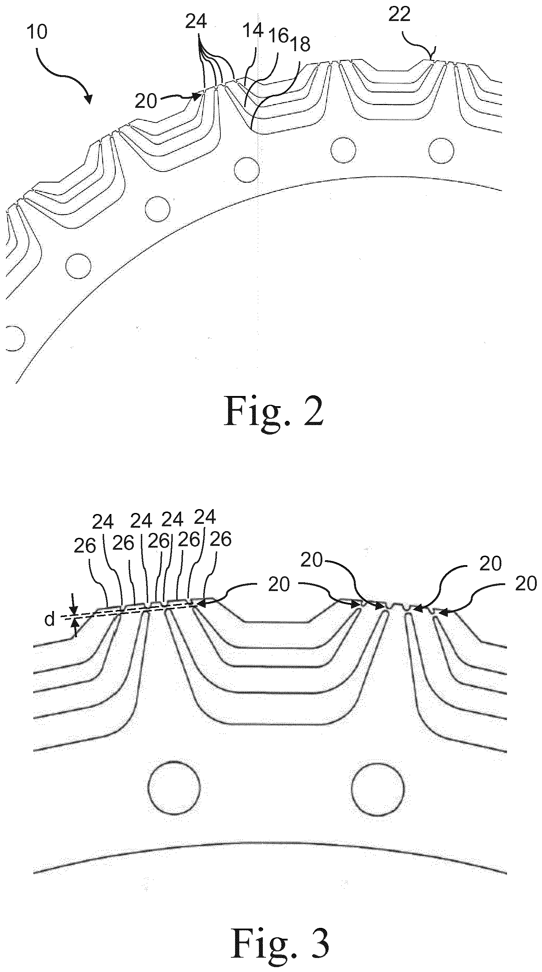

In erfindungsgemäßer Art und Weise ist in Figur 2 ein Rotorschnitt eines Rotors 10 für eine Synchronreluktanzmaschine dargestellt.

Außenseitig, also an der Außenseite 22 (bzw. dem Außenumfang) des Rotors 10 bzw. des jeweiligen Rotorblechs 12, sind dort wie abgebildet Ausnehmungen 24 angeordnet, die die Stege 20 der Barrieren 14, 16, 18 außen abschließen. Dies führt dazu das mit und ohne verwendetem Aufmaß die (in Fig. 3 gut sichtbare) Stegdicke d der Barrierenstege 20 über den Umfang voreingestellt werden kann. Immer vorhandene Toleranzen führen bei Rotoren 10 mit Aufmaß nicht dazu, das beim Abarbeiten des Aufmaßes die Toleranz in der Stegdicke d der Barrieren 14, 16, 18 eingeprägt wird. Sie wirkt nur auf die äußere Dicke 26 der Barrierenerstreckung und nicht im sensitiven Bereich der dünnen Stege 20, die im Betrieb sättigen müssen.

Daher führt eine Exzentrizität der Rotorblechausrichtung, wie sie bei größeren Luftspaltdurchmessern in der Größenordnung der Stegdicke d möglich werden kann, nicht zu einer umlaufenden Stegdickenänderung, die sich im lokalen Fluss und damit auch im Strom abzeichnen würde.

Details der äußeren Ausnehmungen 24 sind in Figur 3 dargestellt. Dargestellt ist eine Barrierenstruktur mit drei Barrieren 14, 16, 18, bei der die äußere eine weitere mittlere Ausnehmung in der äußeren Rotorkontur aufweist. Die äußere und die mittlere Barriere 14, 16 ist mit ihren beidseitigen Stegen 20 mit den erfindungsgemäßen Ausnehmungen 24 an der äußeren Luftspaltseite des späteren Maschinenluftspaltdurchmessers versehen. So lassen sich pro äußerer Barriere 14 zwei Ausnehmungen 20 hin zur mittleren Barriere 16 finden und zwei weitere äußere Ausnehmungen 20 zwischen mittlerer Barriere 16 und der inneren, dritten Barriere 18 finden. Die Ausnehmungen 24 sind gegenüberliegen zu den inneren Ausschnitten 28 der Barrieren 14, 16, 18.

Vorteilhafterweise ergibt sich eine definierte Stegdicke d trotz umlaufender Exzentrizität des Mittelpunkts der Barrierenstruktur bedingt durch Fertigungs- und Montagetoleranzen.

Insbesondere eine Bauweise mittels Rotorsegmentelementen wird dadurch überhaupt erst möglich, die andernfalls aufgrund der Montagetoleranzen zu schlechten Betriebsbedingungen der Elektromaschine führen würden. Dies ermöglicht es Maschinen mit größeren Luftspaltdurchmessern kostengünstig zu bauen.

Die Ausnehmungen 24 und die Barrieren 14, 16, 18, bzw. die Rotorbleche 12 können mittels Schneidverfahren oder Trennverfahren gefertigt werden. Es bieten sich explizit das Laserschneiden, Stanzen oder Erodieren an.

Ein im Sinne Flussführung schädlicher Kanteneffekt der Blechfertigung führt bei erfindungsgemäßer Verwendung der Ausnehmungen und folgendem Abarbeiten der Außenflächen zu einer bleibenden Beeinflussung der Stegkanten in den Ausnehmungen und damit Wirkung der Kanteneffekte auf die dünnen Stege beidseitig. Die abgearbeiteten Flächen des Rotors am Luftspalt zum Stator jedoch werden "freigelegt" und verbleiben dann in geringerem Umfang magnetisch geschädigt und entsprechen dann weitgehend dem Basismaterial. Damit wird in zusätzlich wirkender Art und Weise die Flussführung in den Stegen im Vergleich zum umliegenden Luftspaltbereich mehr behindert, was zu verbessertem Maschinenverhalten führt.

In erfindungsgemäßer Art fördert die zusätzliche Strukturierung der Rotormantelfläche durch die Ausnehmungen die Luftumwälzung im Luftspalt.

Die heute übliche reine Rückseitenkühlung heutiger Radialflussmaschinen ist aufgrund des Wärmetransportes aus dem Luftspalt- und Wicklungsbereich bis hin zur Blechpaketrückseite weniger optimal als im Seitenbereich und im Luftspalt. Innerhalb eines radial umschlossenen Luftspaltes ist der Luftaustausch zudem erheblich reduziert. Gleichzeitig verfügt die stark verwirbelte Spaltströmung jedoch über einen extrem hohen Wärmeübergang, der nicht genutzt wird, da die Luft nicht aus dem umlaufenden Luftspalt gefördert werden kann. Hier erfolgt erfindungsgemäß ein erheblich schnellerer Luftaustausch aus dem Luftspalt heraus und hinein bedingt durch die Ausnehmungen an den Stegen. In Kombination mit der nötigen Schrägung der Rotorpakete zur Verminderung des typischen Drehmomentrippels der Barrierenstruktur ergibt sich eine verbesserter axialer Luftaustausch im Luftspalt und dessen Luftführung.

Die erfindungsgemäße Rotorausführung ermöglicht es eine segmentierte Bauweise auszuführen, die für Baugrößensprünge verwendet werden kann ohne bei wachsendem Luftspaltdurchmesser die Rotorringe ebenfalls als Vollschnitt mit wachsen zu lassen. Die Rotorschnitte können segmentiert werden und die addierten Toleranzen fallen erfindungsgemäß weniger ins Gewicht.

Die damit vereinfacht ermöglichte segmentierte Bauweise der ringförmigen Reluktanzmaschine ermöglicht demnach eine ebenfalls erfindungsgemäße Modularisierung der Fertigungsmittel. Die grundsätzlich ähnliche Auslegung einer Polgeometrie ermöglicht zudem weiterhin eine Baukastenmethodik und einen Modulbau in Bezug auf einer Skalierbarkeit auf mehrere Leistungsgrößen und Drehmomentklassen, trotz gleichbleibender Fertigungstechnologie und Fertigungsfolge. Verschnitt wird in erheblichem Umfang gemindert und ermöglicht auch für sehr große Rotordurchmesser in der segmentierten Bauweise nach heutigen Maßstäben einen Serienbau der Einzelbleche trotz Einzelstückbau der Motoren oder dessen Module.

Radantriebe, Lüfterräder, Lüfterwalzen, Drehtische, Rohrmühlen, Rohröfen, Windturbinen, Strömungsmaschinen können innerhalb eines breiten Leistungsbereiches auf kleineren Fertigungsmaschinen hergestellt werden und fertigungstechnisch auf ein komplettes Baukastensystem reduziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichen

- 10: Rotor
- 12: Rotorblech
- 14: Barriere
- 16: Barriere
- 18: Barriere
- 20: Barrierensteg
- 22: Außenseite
- 24: Ausnehmung
- 26: äußere Dicke
- 28: innerer Ausschnitt
- d: Stegdicke

## Patentansprüche

1. Elektrische Ringmaschine in Ausführung einer Reluktanzmaschine, die als Synchronreluktanzmaschine betrieben wird, mit einem Stator und einem Rotor (10), wobei die elektrische Ringmaschine als Innenläufer ausgeführt ist, wobei der Rotor (10) zur Flussführung Barrieren (14, 16, 18) aufweisende Rotorbleche (12) umfasst, wobei die Rotorbleche (12) als Ringschnitte oder segmentierte Rotorbleche ausgeführt sind und der Rotor (10) aus entsprechenden Ringschnitten oder Segmenten zusammengesetzt ist,
**dadurch gekennzeichnet, dass**
Ausnehmungen (24) an der Außenseite (22) der Rotorbleche (12) in radialer Erstreckung gegenüber inneren Barrieren (16,18 ) ausgeführt sind, wobei die Ausnehmungen (24) jeweils einen Barrierensteg (20) definierter Stegdicke d entstehen lassen, dessen Stegdicke d es ermöglicht, dass der Barrierensteg (20) im Betrieb der Reluktanzmaschine über den Umfang verteilt gleichmäßig in Sättigung geht, wobei der Rotor (10) ein auf sein Endmaß abgearbeitetes Aufmaß aufweist, bei dem das Abarbeiten nur auf eine äußere Dicke (26) der Barrierenerstreckung an der Außenseite (22) des Rotors (10) abseits der Bereiche der Barrierenstege (20) gewirkt hat.

2. Ringmaschine nach Anspruch 1, **dadurch gekennzeichnet, dass** ein durch die äußere Dicke (26) der Barrierenerstreckung definierter Umfang der äußeren Rotorkontur gegenüber der Anordnung der Barrierenstege (20) eine Exzentrizität aufweist.

3. Ringmaschine nach Anspruch 1 oder 2, **dadurch gekennzeichnet, dass** die äußeren Rotorkontur als auf das Endmaß spanabhebend bearbeitete äußeren Rotorkontur, insbesondere abgedrehte äußeren Rotorkontur, ausgebildet ist.

4. Ringmaschine nach einem der vorherigen Ansprüche, bei dem die Rotorstruktur mittels Magnetmaterial in D- und Q-Achse zusätzlich zur Flussführung der Barrierenstruktur manipuliert wird.

5. Verfahren zur Herstellung eines Rotors (10) für eine elektrische Ringmaschine in Ausführung einer Reluktanzmaschine, die als Synchronreluktanzmaschine betrieben wird, wobei der Rotor (10) zur Flussführung Barrieren (14, 16, 18) aufweisende Rotorbleche (12) umfasst, wobei die Rotorbleche (12) als Ringschnitte oder segmentierte Rotorbleche ausgeführt sind und der Rotor (10) aus entsprechenden Ringschnitten oder Segmenten zusammengesetzt ist, und wobei Ausnehmungen (24) an der Außenseite (22) der Rotorbleche (12) in radialer Erstreckung gegenüber inneren Barrieren (16,18) ausgeführt sind, die jeweils einen Barrierensteg (20) definierter Stegdicke d entstehen lassen, dessen Stegdicke d es ermöglicht, dass der Barrierensteg (20) im Betrieb der Reluktanzmaschine über den Umfang verteilt gleichmäßig in Sättigung geht, mit einem Abarbeiten eines Aufmaßes des Rotors (10), das nur auf eine äußere Dicke (26) der Barrierenerstreckung an der Außenseite (22) des Rotors (10) abseits der Bereiche der Barrierenstege (20) wirkt.

6. Verfahren nach Anspruch 5, bei dem die Rotorbleche (12) mit einem Aufmaß gefertigt werden, welches nach Montage zum gewünschten Luftspaltdurchmesser abgearbeitet wird.

## Claims

1. Electric ring machine in the form of a reluctance machine, which is operated as a synchronous reluctance machine, comprising a stator and a rotor (10), wherein the electric ring machine is designed as an internal rotor, wherein the rotor (10) comprises rotor sheets (12) which comprise barriers (14, 16, 18) for flux guidance, wherein the rotor sheets (12) are designed as ring sections or segmented rotor sheets and the rotor (10) is assembled of corresponding ring sections or segments,
**characterized in that**
recesses (24) are formed at the outer side (22) of the rotor sheets (12) in the radial extension opposite to inner barriers (16, 18), wherein the recesses (24) each produce a barrier web (20) of defined web thickness d, the web thickness d of which enables the barrier web (20) to saturate uniformly, distributed over the circumference, during operation of the reluctance machine, wherein the rotor (10) comprises an oversize machined to its final dimension, in which the machining has acted only on an outer thickness (26) of the barrier extension at the outer side (22) of the rotor (10) away from the areas of the barrier webs (20).

2. Ring machine according to claim 1, **characterized in that** a circumference of the outer rotor contour defined by the outer thickness (26) of the barrier extension has an eccentricity with respect to the arrangement of the barrier webs (20).

3. Ring machine according to claim 1 or 2, **characterized in that** the outer rotor contour is formed as an outer rotor contour machined to the final dimension, in particular an outer rotor contour machined by turning.

4. Ring machine according to any one of the preceding claims, in which the rotor structure is manipulated by means of magnetic material in the D- and Q-axis in addition to the flux guidance of the barrier structure.

5. Method for producing a rotor (10) for an electric ring machine in the form of a reluctance machine which is operated as a synchronous reluctance machine, wherein the rotor (10) comprises rotor sheets (12) which comprise barriers (14, 16, 18) for flux guidance, wherein the rotor sheets (12) are designed as ring sections or segmented rotor sheets and the rotor (10) is assembled of corresponding ring sections or segments, and wherein recesses (24) are formed at the outer side (22) of the rotor sheets (12) in the radial extension opposite to inner barriers (16, 18), which each produce a barrier web (20) of defined web thickness d, the web thickness d of which enables the barrier web (20) to saturate uniformly, distributed over the circumference, during operation of the reluctance machine, comprising machining an oversize of the rotor (10), which acts only on an outer thickness (26) of the barrier extension at the outer side (22) of the rotor (10) away from the areas of the barrier webs (20).

6. Method according to claim 5, wherein the rotor sheets (12) are manufactured with an oversize which is machined to the desired air gap diameter after assembly.

## Revendications

1. Machine électrique annulaire réalisée sous la forme d'une machine à réluctance, qui est exploitée en tant que machine synchrone à réluctance, comprenant un stator et un rotor (10), la machine électrique annulaire étant réalisée sous la forme d'un rotor intérieur, le rotor (10) comprenant, pour le guidage du flux, des tôles de rotor (12) présentant des barrières (14, 16, 18), les tôles de rotor (12) étant réalisées sous la forme de découpes annulaires ou de tôles de rotor segmentées et le rotor (10) étant assemblé à partir de découpes annulaires ou de segments correspondants,
**caractérisée en ce que**
des évidements (24) sont réalisés sur le côté extérieur (22) des tôles de rotor (12), dans l'extension radiale, en regard de barrières intérieures (16, 18), les évidements (24) laissant chacun subsister un pont de barrière (20) d'épaisseur de pont définie d, dont l'épaisseur de pont d permet au pont de barrière (20), pendant le fonctionnement de la machine à réluctance, d'entrer en saturation de manière uniforme sur la circonférence, le rotor (10) présentant une surépaisseur usinée jusqu'à sa dimension finale, dans laquelle l'usinage n'a agi que sur une épaisseur extérieure (26) de l'extension des barrières sur le côté extérieur (22) du rotor (10), à l'écart des zones des ponts de barrière (20).

2. Machine annulaire selon la revendication 1, **caractérisée en ce qu'**une circonférence du contour de rotor extérieur définie par l'épaisseur extérieure (26) de l'extension des barrières présente une excentricité par rapport à la disposition des ponts de barrière (20).

3. Machine annulaire selon la revendication 1 ou 2, **caractérisée en ce que** le contour de rotor extérieur est configuré sous la forme d'un contour de rotor extérieur usiné par enlèvement de matière jusqu'à la dimension finale, en particulier d'un contour de rotor extérieur usiné par tournage.

4. Machine annulaire selon l'une des revendications précédentes, dans laquelle la structure du rotor est manipulée au moyen d'un matériau magnétique dans les axes D et Q, en plus du guidage du flux par la structure de barrières.

5. Procédé de fabrication d'un rotor (10) pour une machine électrique annulaire réalisée sous la forme d'une machine à réluctance, qui est exploitée en tant que machine synchrone à réluctance, le rotor (10) comprenant, pour le guidage du flux, des tôles de rotor (12) présentant des barrières (14, 16, 18), les tôles de rotor (12) étant réalisées sous la forme de découpes annulaires ou de tôles de rotor segmentées et le rotor (10) étant assemblé à partir de découpes annulaires ou de segments correspondants, et des évidements (24) étant réalisés sur le côté extérieur (22) des tôles de rotor (12), dans l'extension radiale, en regard de barrières intérieures (16, 18), lesquels laissent chacun subsister un pont de barrière (20) d'épaisseur de pont définie d, dont l'épaisseur de pont d permet au pont de barrière (20), pendant le fonctionnement de la machine à réluctance, d'entrer en saturation de manière uniforme sur la circonférence, avec un usinage d'une surépaisseur du rotor (10), qui n'agit que sur une épaisseur extérieure (26) de l'extension des barrières sur le côté extérieur (22) du rotor (10), à l'écart des zones des ponts de barrière (20).

6. Procédé selon la revendication 5, dans lequel les tôles de rotor (12) sont fabriquées avec une surépaisseur qui, après montage, est usinée jusqu'au diamètre d'entrefer souhaité.
